Europäisches Patentamt

(19) European Patent Office

Office européen des brevets

(11) Publication number: **0 001 177**
A1

(12) **EUROPEAN PATENT APPLICATION**

(21) Application number: 78300356.9

(22) Date of filing: 06.09.78

(51) Int. Cl.²: **B 62 D 21/00**

(30) Priority: 06.09.77 GB 37225/77

(43) Date of publication of application:
21.03.79 Bulletin 79/6

(84) Designated contracting states:
BE CH DE FR NL SE

(71) Applicant: CHRIS HUDSON (INTERNATIONAL) LIMITED
Hudson House North Street
Romford Essex(GB)

(72) Inventor: Hudson, Christopher Robin
474 Belmont House Wingletye Lane
Hornchurch Essex(GB)

(72) Inventor: Ludwig, Richard Anthony
10 St Mays Lane
Upminster Essex(GB)

(74) Representative: Williams, John Francis et al,
J.F. Williams & Co 34 Tavistock Street
London WC2E 7PB(GB)

(54) Improvement in or relating to trailers and beams for chassis construction.

(57) A chassis beam has two sides (10, 11) spaced apart and provided with internal reinforcing members (12). The reinforcing members (12) are distributed along the beam and extend between the opposite sides. The reinforcing members may be tubular or may comprise portions of conventional girder section or lengths of pipe cut longitudinally.

Although the application of the beam is not restricted to any particular field the invention also includes a trailer provided with such a beam and also a trailer with a single longitudinally extending beam which beam is constructed in this form.

FIG.1

- 1 -

Improvement in or relating to trailers and beams for chassis construction.

This invention relates to commercial vehicles and more particularly to beams for chassis construction suitable for forming a semi-trailer with a single longitudinal beam and to a trailer having such a single longitudinal beam.

Light boat trailers are known to us which employ a single draw beam of box section. Conventional box section beams are only suitable for carrying relatively light loads and accordingly heavy goods trailers for carrying for example 3 to 30 tons employing a single longitudinal beam have not until now been a practical proposition.

The main advantage of the invention is that it provides a beam of extremely strong construction but which is still light enough to permit application to chassis construction. In a major application it permits the construction of a heavy goods trailer with a single longitudinally extending beam.

According to the invention there is provided a chassis beam provided with internal reinforcing members distributed therealong and extending between opposite sides of the beam.

The beam may be of substantially box section.

The reinforcing members may extend contiguously between sides adjacent said opposite sides of a beam of substantially box section. Alternatively the reinforcing members may extend part way between and intermediately of sides adjacent said opposite sides.

The reinforcing members may be tubular e.g. of round or rectangular cross section and may be of transverse external cross section substantially equal to the internal width of the box section.

Alternatively, the reinforcing members may comprise portions of conventional girder section e.g. "L" or "H" section.

The beam may comprise upper and lower strips with the reinforcing members secured therebetween by welding. Side strips may be secured to the upper and lower strips by welding along adjacent edges to complete a substantially box section beam.

The box section may be subdivided to provide a tank for receiving fuel oil or water or to act as a pressure reservoir for air for a brake servo assistance system and/or for a pressure supported wheel suspension system.

The invention also includes a trailer or semi-trailer having a single longitudinally extending chassis beam of construction substantially as hereinbefore defined.

In order that the invention and its various other preferred features may be understood more easily some embodiments thereof will now be described, by way of example only, with reference to the drawings, in which:-

Figure 1 is a vertical cross sectional view taken longitudinally of a trailer draw beam constructed in accordance with the invention;

Figure 2 is a cross sectional view taken on the line X - X of Figure 1;

Figure 3 is a cross sectional view taken on the line Y - Y of Figure 2;

Figure 4 is a cross sectional view similar to Figure 3 showing an alternative arrangement of the fabrication of the beam;

Figure 5 is a horizontal cross sectional view similar to Figure 2 showing an alternative construction of beam;

Figure 6 is a horizontal cross sectional view similar to Figure 2 showing another alternative construction of beam;

Figure 7 is a cross sectional view taken longitudinally and horizontally of an alternative construction of beam;

Figure 8 is a transverse cross section of yet another possible construction of beam;

Figure 9 is a plan view showing part of a trailer employing a single longitudinal beam in accordance with the invention, and

Figure 10 is a side view of the trailer of Figure 6.

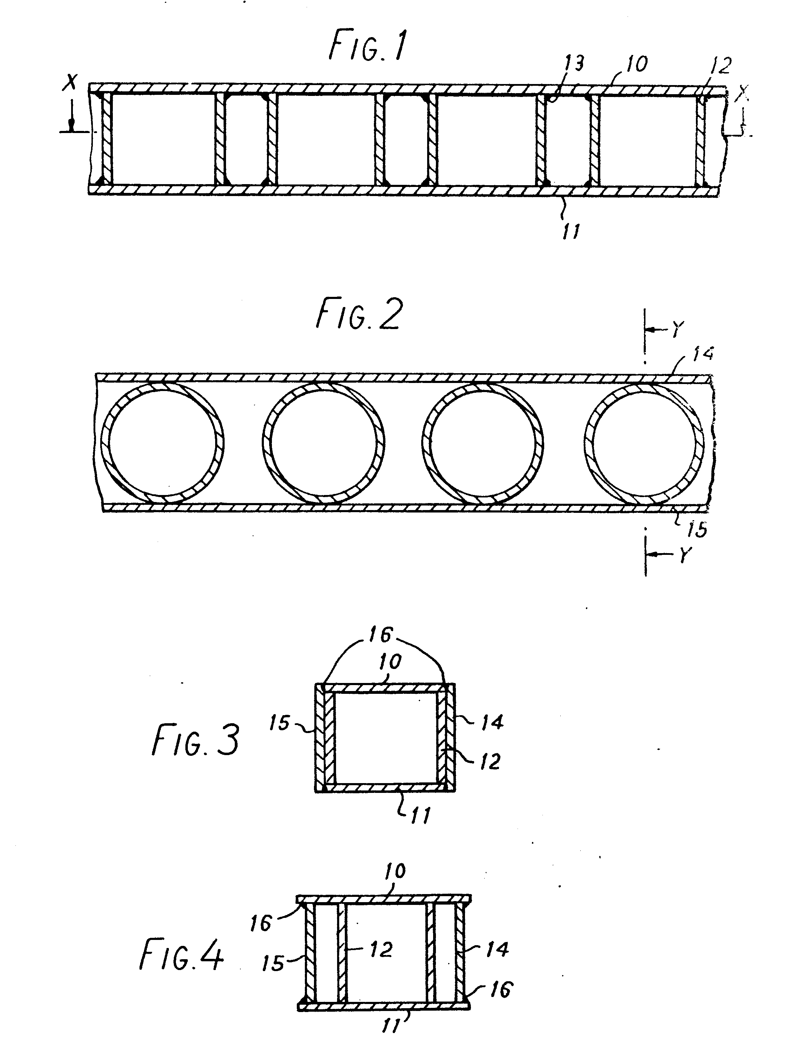

The trailer draw beams of Figures 1 to 4 comprises upper and lower strips 10 and 11 respectively of steel plate between which reinforcing members 12, formed of equal length sections of steel pipe, are evenly spaced apart along the length of the strips 10 and 11 and are welded thereto by welds 13. Side strips 14, 15 of steel plate of width slightly larger than the length of the reinforcing member 12 may be welded at their edges to the edges of the upper and lower strips 10 and 11 by means of deep welds 16 to complete a box section construction. However, the side strips are not essential to the contruction of a robust beam and may be dispensed with if desired. The beam so fabricated provides an extremely strong yet comparatively lightweight construction.

The reinforcing members 12 can be arranged to be in contact one with another along the length of the beam and if sufficiently large in diameter can have additional internal welds where they join to upper and lower strips 10 and 11.

It will be appreciated that in the case of box section construction for the beam the provision of the side strips after the interconnection of the reinforcement members and upper and lower strips permits access for the welding equipment.

The construction of Figure 4 employs reinforcing members 12 which have a cross sectional diameter less than the internal width of the box section and leave a channel on each side of the beam for routing of for example cables.

Although the construction illustrated employs pipe of circular cross section it will be appreciated that pipes of other cross sectional shape could be employed. In addition although each pipe is shown to be of diameter equal to the width of the box section a plurality of smaller pipes could be disposed side by side transversely of the box section.

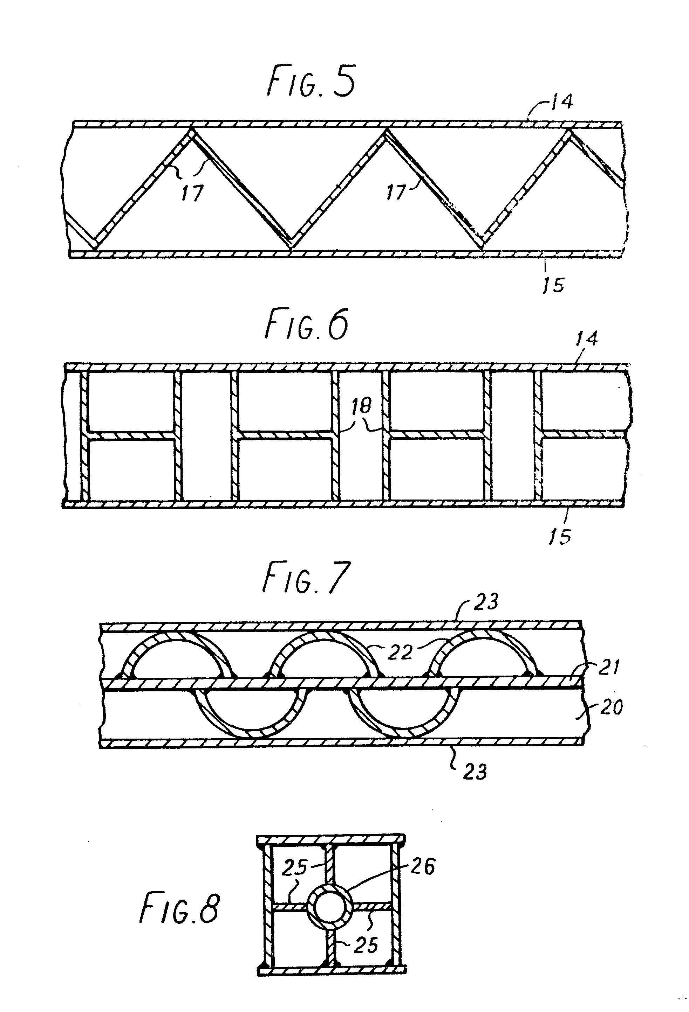

The drawings of Figures 5 to 8 show four possible alternative types of reinforcing members which may be employed. In Figure 5 sections 17 of steel angle of "L" shaped cross section are employed and these are arranged side by side so as to traverse the width of the box section as will be clear from the drawing and are again welded to top and bottom strips (not shown) of the box section.

In Figure 6 "II" section steel girder sections 18 are employed the uprights of the "II" extending transversely of the box section at right angles to its length. The sections 18 are again welded to the top and bottom strips (not shown) of the box section.

Sections of many other standard girder cross sectional shapes can be employed instead of "L" or "I" shape and draw bars reinforced with such sections are considered to fall within the scope of this invention.

The beam of Figure 7 is basically of "I" configuration having upper and lower ends 20 and an upright 21. Reinforcing members 22 are in this case formed of short lengths of steel pipe in this case of circular cross section which have been cut in half along their longitudinal axis to provide lengths of semi-circular cross section. These reinforcing members are of length equal to the distance between the ends 20 and to the upright 21 and can be staggered on opposite sides of the upright as shown or can be oppositely disposed in alignment. Optional side plates 23 can then be welded to the ends 20.

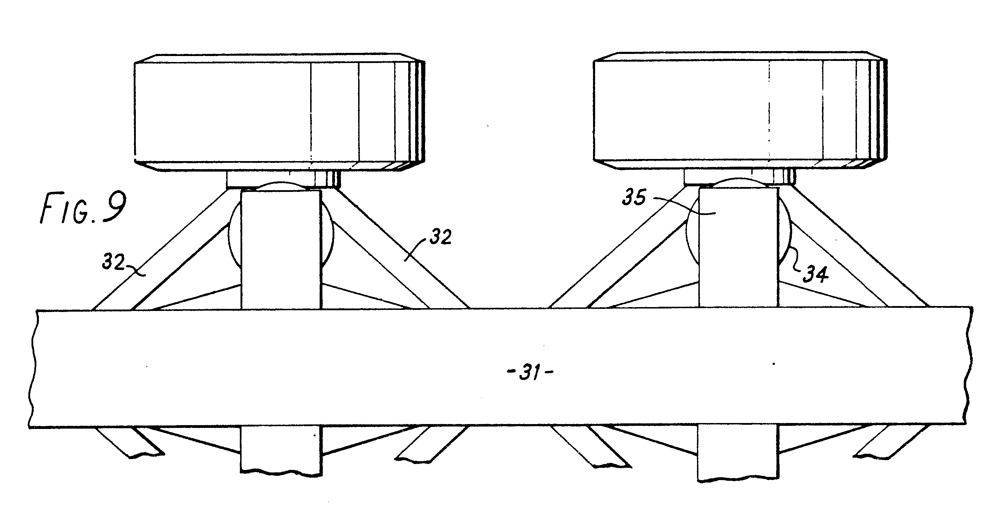

The beam of Figure 8 employs reinforcing members 25 which are of plate like form and which extend between a tubular member 26 and the upper, the lower and side plates of a box section beam. The tubular member 66 is useful for example for routing cables for control of vehicle functions. The reinforcing members 25 may be formed by four continuous strips which extend along the tubular member 26 or alternatively a plurality of plate like elements can be provided in succession along the tubular member.

Although the beam constructions described have employed reinforcing members formed of sections of for example pipe or girder section extending axially at right angles to the upper and lower plates of the beam with a view to providing maximum strength in the downward direction, similar constructions in which the reinforcing members extend with their axes at right angles to side plates of the beam can be employed.

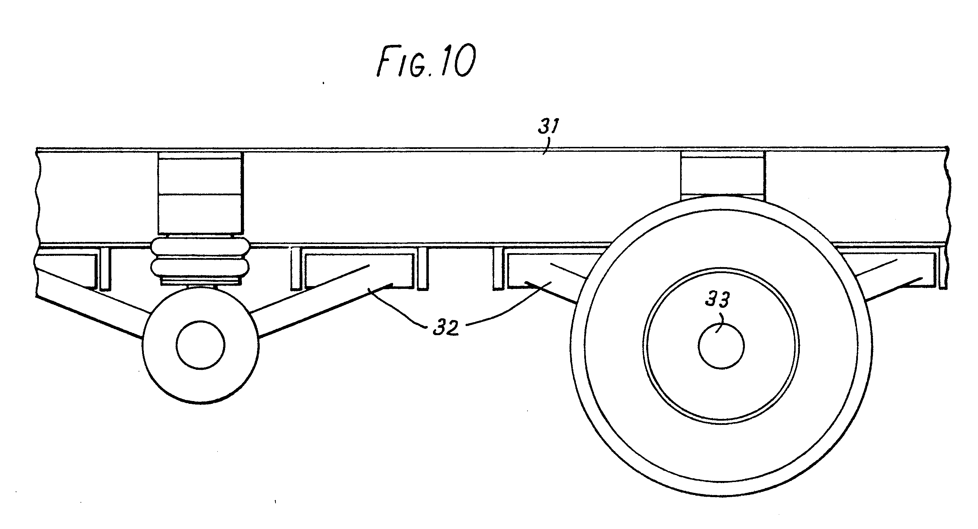

The drawings of Figures 9 and 10 show part of a trailer for articulation to a tractor unit and having a single longitudinal beam 3 constituted by a beam as previously described. The single beam has in this case four wheels each pivotally mounted on the beam by means of a wishbone assembly 32 which is directly and non pivotally connected to a stub axle 33 and is equipped with an independent suspension system which in this case comprises a diaphragm or bellows 34 containing pressurised air which diaphragm or bellows acts between the wishbone assembly 22 and a laterally extending bearer 25.

The beams as previously described can have their interior subdivided by panels to provide one or more tanks for retaining a liquid e.g. fuel oil or a pressure medium e.g. air for operating a brake servo or for pressurising the suspension system. In the latter case the pressure tank can be adapted for connection to a compressor of a tractor unit. It may be necessary to provide holes through the reinforcing members to ensure that liquid or pressurised fluid can pass freely between reinforcing members where a plurality of reinforcing members lie within one tank.

Claims

1.     A chassis beam having two sides (10, 11, 20) spaced apart characterized in that internal reinforcing members (12, 17, 18, 22,25) are distributed therealong and extend between said opposite sides (10, 11, 20) of the beam.

2.     A beam as claimed in Claim 1 of substantially box section.

3.     A beam as claimed in Claim 2, wherein the reinforcing members (12, 17, 18, 22, 25) extend contiguously between sides (14, 15, 23) adjacent said opposite sides.

4.     A beam as claimed in Claim 2, wherein the reinforcing members (12, 17, 18, 22, 25) extend part way between and intermediately of sides (14, 15, 23) adjacent said opposite sides.

5.     A beam as claimed in any one of the preceding Claims wherein the reinforcing members (12) are tubular.

6.     A beam as claimed in Claim 5, wherein the axes of the tubular reinforcing members (12) extend substantially perpendicularly to said opposite sides (10, 11) of the beam.

7.     A beam as claimed in Claim 5, wherein the axis of the tubular reinforcing members (12) extend substantially parallel to said opposite sides (10, 11) of the beam.

8.     A beam as claimed in any one of Claims 2 to 4, wherein the reinforcing members (12) are tubular and are of transverse external cross-section substantially equal to the internal width of the box section.

9.      A beam as claimed in any one of Claims 1 to 4, wherein the reinforcing members (17, 18) comprise portions of conventional girder section.

10.     A beam as claimed in any one of Claims 1 to 9, comprising upper and lower strips (10, 11, 20) with the reinforcing members (12, 17, 18, 22, 25) secured therebetween by welding.

11.     A beam as claimed in Claim 10, comprising side strips (14, 15, 23) secured to the upper and lower strips by welding along adjacent edges to complete a substantially box section beam.

12.     A beam as claimed in any one of Claims 1 to 4, having a centrally disposed elongate strip like portion (21) joining said opposite sides (20) of the beam to form an "I" shaped configuration and wherein said reinforcing members (22) comprise lengths of pipe cut longitudinally and secured with longitudinal cut edges against the strip like portion.

13.     A beam as claimed in Claim 12, wherein the reinforcing members (22) are secured on opposite sides of the strip like portion (21) and mutually aligned in pairs.

14.     A beam as claimed in Claim 12, wherein the reinforcing members (22) are secured on opposite sides of the strip like portion (21) with the members to one side being staggered with respect to the members on the opposite side.

15. A beam as claimed in Claim 1 or 2, comprising an elongate tubular member (26) extending longitudinally and intermediately of the sides (10, 11, 14, 15) and reinforcing members (25) of plate like form which extend between the tubular member (26) and each of the sides (10, 11, 14, 15) and which are disposed successively along the tubular member (26).

16. A beam as claimed in Claim 1 or 2, comprising an elongate tubular member (26) extending longitudinally and intermediately of the sides and reinforcing members (25) of continuous strip like form which extend along the tubular member (26) between the tubular member (26) and each of the sides (10, 11, 14, 15).

17. A beam as claimed in Claim 2 or any Claim dependent directly or indirectly from Claim 2, wherein the interior of the box section is subdivided by panels to provide one or more tanks for containing a liquid or a pressure medium.

18. A beam as claimed in Claim 17, wherein the reinforcing members are provided with holes therethrough for permitting passage of the liquid or the pressure medium.

19. A beam as claimed in Claim 17 or 18, wherein a tank is adapted for connection to a compressor of a tractor unit.

20. A trailer provided with a beam (31) which beam is constructed as claimed in any one of Claims 1 to 19.

21. A trailer with a single longitudinally extending beam (31) which beam is constructed as claimed in any one of Claims 1 to 19.

22. A trailer as claimed in Claim 21, provided with wheels each pivotally mounted on the beam by means of a wishbone assembly. (3).

23. A trailer as claimed in Claim 22, wherein each wishbone assembly (32) is directly and non-pivotally connected to a stub axle (3).

24. A trailer as claimed in Claim 23, wherein each wishbone assembly is equipped with an independant suspension system (34) acting between the wishbone assembly and a bearer (35) extending laterally from the beam (31).

## FIG.1

X

13  10  12

11

## FIG.2

Y

14

15

Y

## FIG.3

16
10

15  14

12

11

## FIG.4

10

16

15  12  14

16

11

FIG. 5

14

17

17

15

FIG. 6

14

18

15

FIG. 7

23

22

21

20

23

FIG. 8

25

26

25

FIG.9

32    32    35    34    -31-

FIG.10

31

32

33

# 0001177

## EUROPEAN SEARCH REPORT

**EUROPEAN SEARCH REPORT**

Application number

**EP 78 30 0356**

| DOCUMENTS CONSIDERED TO BE RELEVANT | | | CLASSIFICATION OF THE APPLICATION (Int. Cl.²) |
|---|---|---|---|
| **Category** | **Citation of document with indication, where appropriate, of relevant passages** | **Relevant to claim** | **B 62 D 21/00** |
| X | DE - C - 897 953 (SCHAEFER) <br> * Entire document * <br> --- | 1-3,5, 7,9,10, 15,16, 20,21 | |
| X | DE - C - 928 694 (SCHAEFER) <br> * Entire document * <br> --- | 1-3,5, 7,8,10 11,15, 16,20, 21 | |
| X | DE - A - 2 254 299 (TOYOTA) <br> * Page 3, paragraph 8 to page 4, paragraph 4; figures 1-6 * <br> --- | 1,2,4, 6,10, 12,13 | **TECHNICAL FIELDS SEARCHED (Int.Cl.²)** <br> **B 62 D** <br> **B 60 G** |
| X | DE - A - 2 537 691 (M.A.N.) <br> * Page 7, paragraph 3 to page 9, paragraph 2; figures 1-6 * <br> --- | 1-3,17, 19-21 | |
| X | US - A - 3 940 162 (WINSLOW) <br> * Column 2, line 66 to column 5, line 21; figures 1-5 * <br> --- | 1,3,9, 10,20, 21 | |
| | DE - C - 607 577 (BAERSCH) <br> * Page 3, lines 75-88; figures 6-9 * <br> --- | 1-3,20 21 | **CATEGORY OF CITED DOCUMENTS** <br> X: particularly relevant <br> A: technological background <br> O: non-written disclosure <br> P: intermediate document |
| | US - E - 20 030 (LEDWINKA) <br> * Page 2, left-hand column, lines 32-75; figures 3-6 * <br> --- | 1-3,5, 7,9 | T: theory or principle underlying the invention <br> E: conflicting application <br> D: document cited in the application <br> L: citation for other reasons |
| | US - A - 2 840 388 (BURROWS) <br> * Column 2, line 65 to column 3,../. | 1-3,10, 11 | &: member of the same patent family, corresponding document |

The present search report has been drawn up for all claims

| Place of search | Date of completion of the search | Examiner |
|---|---|---|
| The Hague | 08-12-1978 | ESPEEL |

EPO Form 1503.1  06.78

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | line 14; figures 3,6,7 * | | |
| | DE - B - 1 025 737 (LINKE HOFMANN BUSCH) <br> * Entire document * | 1,9,10, 12,14 | |
| | US - A - 2 752 219 (MILLER) <br> * Column 1, line 51 to column 2, line 5; figures 1-3 * | 22-24 | |
| PE | DE - A - 2 627 902 (DAIMLER BENZ) <br> * Pages 4,5; figures 1-5 * | 1-3,5, 6,8,10 | TECHNICAL FIELDS SEARCHED (Int. Cl.³) |
| A | FR - A - 1 170 058 (M.A.N.) | 1-3,17 | |
| A | FR - A - 767 311 (RENAULT) | 1,2 | |
| A | GB - A - 548 897 (FISHER) | 1-3 | |
| A | GB - A - 428 687 (RENAULT) | 1-3,5,7 | |
| A | DE - C - 929 052 (SCHMITZ) | 1,12 | |
| A | US - A - 2 136 122 (ALMDALE) | 1 | |